**Europäisches Patentamt**

(19) **European Patent Office**

**Office européen des brevets**

(11) Veröffentlichungsnummer: **0 054 144**
**B1**

(12) **EUROPÄISCHE PATENTSCHRIFT**

(45) Veröffentlichungstag der Patentschrift:
28.03.84

(21) Anmeldenummer: 81108705.5

(22) Anmeldetag: 22.10.81

(51) Int. Cl.³: **C 08 F 291/02,** C 08 F 279/02 //
(C08F291/02,
212/06),(C08F279/02, 212/06)

(54) **Verfahren zur kontinuierlichen Herstellung von mit Kautschuk modifizierten Polymerisaten von Vinylaromaten.**

(30) Priorität: 16.12.80 DE 3047303

(43) Veröffentlichungstag der Anmeldung:
23.06.82 Patentblatt 82/25

(45) Bekanntmachung des Hinweises auf die Patenterteilung:
28.03.84 Patentblatt 84/13

(84) Benannte Vertragsstaaten:
BE DE FR GB IT NL

(56) Entgegenhaltungen:
FR - A - 2 008 299

CHEMICAL ABSTRACTS, Band 81, Nr. 26, 30. December
1974, Seite 47, Nr. 170514k Columbus, Ohio, U.S.A.

(73) Patentinhaber: **BASF Aktiengesellschaft,
Carl-Bosch-Strasse 38, D-6700 Ludwigshafen (DE)**

(72) Erfinder: **Echte, Adolf, Dr., Leuschnerstrasse 42,
D-6700 Ludwigshafen (DE)**
Erfinder: **Gausepohl, Hermann, Dr., Neuweg 10,
D-6704 Mutterstadt (DE)**
Erfinder: **Hambrecht, Juergen, Dr., An der Steige 12,
D-6903 Neckargemuend-Dilsberg (DE)**
Erfinder: **Gerberding, Karl, Dr., In der Dreispitz 9,
D-6706 Wachenheim (DE)**

ACTORUM AG

Verfahren zur kontinuierlichen Herstellung von mit Kautschuk modifizierten Polymerisaten von Vinylaromaten

Die Erfindung betrifft ein Verfahren zur kontinuierlichen Herstellung von mit Kautschuk modifizierten Polymerisaten von Vinylaromaten in Masse oder Lösung, wobei die Polymerisation im üblichen Temperaturbereich in isothermbetriebenen Reaktionszonen durchgeführt wird und das erhaltene Polymerisat auf üblichem Wege aufgearbeitet wird.

Zum Stand der Technik nennen wir:

(1) US-PS 3 396 311
(2) US-PS 3 868 434
(3) DE-OS 17 70 392
(4) DE-OS 26 59 175
(5) DE-OS 26 13 352

Es ist bekannt, dass die Eigenschaften schlagfest modifizierter Styrolpolymerisate weitgehend vom Pfropfungsgrad bestimmt werden. Die Bemühungen um eine verbesserte Pfropfung der als Weichkomponente eingesetzten Kautschuke sind daher nicht neu.

Da dies bisher nicht in dem gewünschten Masse möglich war, wurde u.a. versucht, spezielle Eigenschaften der Thermoplaste wie hohe Schlagzähigkeit, hohen Glanz oder gute Transluzenz durch Verwendung von anionisch hergestellten Blockkautschuken von Typ A–B, A–B–A oder B–A–B (A = Styrol; B = Butadien) oder durch sog. Sternblockcopolymere in reiner Form oder im Gemisch mit ihren Homopolymeren zu erzielen. Als Beispiel seien angeführt die DE-OS 2 646 508, DE-OS 2 646 509 und DE-OS 2 717 77 sowie DE-OS 2 504 118. Der vorstehend geschilderte Lösungsweg ist aber kostenungünstig, da Blockkautschuke, von denen der eine Block thermoplastisches Verhalten zeigt, spezielle Aufarbeitungstechniken erforderlich machen.

Es ist daher vorteilhafter, wenn die Verknüpfung der Bausteine Kautschuk-Termoplast in situ, d.h. während der Polymerisation des thermoplastischen Kunststoffs stattfindet, wie dies in (1) bzw. (2) beschrieben ist. Als Initiatoren werden die üblicherweise angewandten Peroxide eingesetzt.

Der Nachteil der beschriebenen Verfahren ist es, dass man wegen polymerisationstechnischer Schwierigkeiten, wie einer unzureichenden Wärmeabfuhr oder einer zu hohen Lösungsviskosität oder einer vorzeitigen Vernetzung des Kautschuks bei hohen Temperaturen, nur kleine Initiatorkonzentrationen verwenden kann [vgl. (4)], bzw. bei üblichen Initiatorkonzentrationen nur mit relativ niedrigen Temperaturen arbeiten kann [vgl. (1) und (2)]. Dies führt dazu, dass der Pfropf-Grad zu niedrig liegt, um Produkte mit speziellen Eigenschaften, wie beispielsweise Transluzenz, oder solche mit sehr hohem mechanischem Niveau herzustellen.

In (5) ist beschrieben, die Pfropfung des Kautschuks dadurch zu erhöhen, dass man die Polymerisation in der Anfangsphase adiabatisch geführt (vgl. Beispiel 1). Eine gute Pfropfung wird mit dieser Methode zwar erreicht, jedoch bietet die Übertragung in den technischen Massstab wegen der unkontrollierten Reaktion unüberwindliche Schwierigkeiten. Deshalb ist in (5) schon vorgeschlagen, den hohen Pfropfgrad in einem Rohrreaktor durch radikalische Initiierung und bei hoher Temperatur isotherm herzustellen. Jedoch zeigten spätere Versuche, dass die Standzeiten eines solchen Rohr-Reaktors sehr kurz sind; er wächst innerhalb von 1–2 Tagen mit vernetztem Material zu. Aufgabe der vorliegenden Erfindung war es daher, ein Verfahren zu finden, das bei ausreichender Pfropfung des Kautschuks die erwähnten Schwierigkeiten, wie mangelnde Wärmeabfuhr, vorzeitige Vernetzung des Kautschuks oder Anwachsungen im Reaktor, vermeidet und das sich in den technischen Massstab übertragen lässt.

Die Lösung dieser Aufgabe erfolgt durch die im Patentanspruch 1 genannten Massnahmen.

Die kontinuierliche Herstellung von mit Kautschuk modifizierten Polymerisaten von Vinylaromaten ist insbesondere in (3) hinreichend beschrieben (vgl. das Verfahrensprinzip Kessel-Turm-Kaskade), so dass bezüglich der Durchführung des kontinuierlichen Verfahrens auf diese Druckschrift und auf den darin abgehandelten Stand der Technik verwiesen werden kann.

Als monomere aromatische Vinylverbindungen a1) kommen für das erfindungsgemässe Verfahren Styrol, sowie dessen Derivate und $\alpha$-Methylstyrol in Betracht. Die genannten Verbindungen können entweder allein oder im Gemisch miteinander verwendet werden. Bevorzugt wird Styrol alleine verwendet.

Als kautschukartige Polymerisate a2), die in dem erfindungsgemässen Verfahren angewendet werden können, eignen sich natürliche oder synthetische Kautschuke sowie die allerdings das Verfahren verteuernden Styrol-Butadien-Blockcopolymerisate mit bis zu 25 Gew.-% Styrol-Einheiten. Besonders geeignete Kautschuke sind Polybutadiene vom medium- oder high-cis-Typ mit Molekulargewichten im Bereich von 70 000 bis 350 000 (Gewichtsmittel) sowie Polyisoprene und Polyisobutylene oder Mischpolymerisate aus Butadien und Isopren. Ferner sind geeignet die Äthylen-Propylen-Copolymerisate bzw. die sogenannten EPDM-Kautschuke. Ebenfalls geeignet zur Herstellung witterungsbeständiger Formmassen sind Kautschuke auf Acrylatbasis, bzw. Mischungen aus geringen Anteilen an Diolefinen, wie Butadien oder Isopren, in im wesentlichen Polyacrylat enthaltenden Kautschuken. Die Kautschuke werden in Mengen von vorzugsweise 3 bis 30 Gew.-%, bezogen auf Monomere(s) a1) angewendet.

Das erfindungsgemässe Verfahren kann sowohl in Masse als auch in Lösung durchgeführt werden. Bei der Polymerisation in Masse wird der Kautschuk in dem (n) zu polymerisierenden vinylaromatischen Monomeren gelöst und die Polymerisation unter Zugabe von Initiatoren und/oder Reglern begonnen.

Falls die Polymerisation in Lösung durchgeführt wird, kommen als geeignete Lösungsmittel a3) Toluol, Xylol, Ethylbenzol, Methylethylketon oder Tetrahydrofuran in Frage. Die genannten Lösungsmittel werden in Mengen von 2 bis 25 Gew.-%, bezogen auf vinylaromatisches Monomeres angewendet. Besonders bevorzugt wird Ethylbenzol für das erfindungsgemässe Verfahren.

Als Radikalinitiatoren b) kommen insbesondere Alkyl- oder Acylperoxide in Frage. Bevorzugt werden Dibenzylperoxid, Tertiär-butylperoctoat oder Tertiär-butylperbenzoat, in Mengen von 0,05 bis 0,5 Gew.%, bezogen auf Monomer(s), angewendet.

Als Kettenüberträger c) kommen die üblicherweise verwendeten Mercaptane mit 14 bis 18 C-Atomen in Betracht. Von den Mercaptanen haben sich besonders das n-Butylmercaptan, das n-Octylmercaptan sowie das n- oder t.-Dodecylmercaptan bewährt. Die Menge an Mercaptan beträgt, falls diese angewendet werden, in der Regel 0,01 bis 0,3 Gew.-%, bezogen auf das vinylaromatische Monomere.

Die Polymerisationstemperaturen liegen im Bereich von 80 bis 180°C, wenn alle Reaktionszonen berücksichtigt werden. In der Trockungsstufe bzw. Entgasungsstufe werden sogar höhere Temperaturen angewendet. Das erfindungsgemässe Verfahren wird in mindestens 2 Reaktionszonen durchgeführt, die jeweils isotherm betrieben werden. So ist es möglich, das Verfahren in Reaktionszonen unterschiedlicher Bauart, z.B. einem Rührkesselreaktor und einem Röhrenreaktor durchzuführen. Bevorzugt wird das erfindungsgemässe Verfahren jedoch in mehr als 2 Reaktionszonen, z.B. in einer 2-Kessel-2-Turm-Kaskade durchgeführt. In allen Fällen ist es erforderlich, das Verfahren sowohl in den Kesseln als auch in den Turmreaktoren isotherm durchzuführen. Bevorzugt ist es, die erste Reaktionszone als Rührkessel auszugestalten. Bezüglich der Durchführung des erfindungsgemässen Verfahrens in nur 2 Reaktionszonen in Form von liegenden Reaktoren wird auf die US-PS 3 903 202 verwiesen.

Während der Polymerisation, insbesondere nach Herstellung der Lösung des Kautschuks oder vor der Verarbeitung der nach dem erfindungsgemässen Verfahren erhaltenen schlagfesten Polymerisate können übliche Zusatzstoffe, wie innere Gleitmittel, Antioxidantien oder UV-Stabilisatoren, sowie Schmiermittel, Füllstoff u.dgl. dem Reaktionsansatz in üblichen, dem Fachmann bekannten Mengen, zugesetzt werden.

Im Prinzip ist es möglich, wie bereits geschildert, die Polymerlösung nach Passieren der 2. Reaktionszone einer üblichen Entgasungszone zuzuführen und sie dort von Restmonomeren und Lösungsmittel zu befreien. Zweckmässiger ist es jedoch, den Umsatz in einer oder mehreren weiteren Reaktionszonen, die ebenfalls isotherm betrieben werden, jedoch sonst keinen speziellen Kriterien unterliegen, auf mindestens 70 Gew.-% oder höher zu steigern, bevor die Polymerlösung in einer Entgasungszone von vinylaromatischen Monomeren und gegebenenfalls von Lösungsmitteln in an sich bekannter Weise befreit wird.

Wesentlich für die Durchführung des erfindungsgemässen Verfahrens ist, dass bei isothermer Durchführung der Polymerisation die Verweilzeit der Polymerisat-Lösung in der ersten Reaktionszone kleiner oder gleich 35 Minuten, vorzugsweise kleiner oder gleich 25 Minuten ist. Diese Bedingungen kann der Fachmann anhand der gegebenen Reaktorgrössen über den Durchsatz festlegen.

Der Vorteil des erfindungsgemässen Verfahrens besteht darin, dass hohe Pfropfgrade des Kautschuks und hohe Pfropfausbeuten erzielt werden, ohne dass es zu Schwierigkeiten in der Wärmeabfuhr, zu Kesselanwachsungen oder zu vorzeitigen Vernetzungen kommt. Ein weiterer Vorteil besteht darin, dass sich gezielt mit ein und demselben Kautschuk je nach Reaktionsführung Produkte mit hoher Schlagzähigkeit oder mit guter Transluzenz herstellen lassen.

Die nach dem erfindungsgemässen Verfahren erhaltenen Formmassen können nach dem bekannten Verfahren der Thermoplastverarbeitung bearbeitet werden, also z.B. durch Extrudieren, Spritzgiessen, Kalandrieren, Hohlkörperblasen, Pressen oder Sintern; besonders bevorzugt werden aus dem nach dem erfindungsgemässen Verfahren hergestellten Formmassen Formteile durch Spritzgiessen hergestellt.

Sie können auch zur Abmischung mit anderen schlagfesten Polymerisaten, die andere Teilchengrössen oder Morphologien besitzen, verwendet werden.

Die in den Beispielen und Vergleichsversuchen aufgeführten Produkteigenschaften wurden wie folgt gemessen:

1. Streckspannung nach DIN 53445
2. Reissfestigkeit nach DIN 53445
3. Die Lochkerbschlagzähigkeit, $a_{KL}$[kJ/m²], wird nach dem DIN-Entwurf auf Beschluss des Fachnormenausschusses Kunststoffe 4.3 vom März 1975, in Vorbereitung, bestimmt.

Die Erfindung wird nachstehend anhand von Beispielen und Vergleichsversuchen näher erläutert. Alle darin angegebenen Teile und Prozente beziehen sich, sofern nichts anderes vermerkt ist, auf das Gewicht.

Beispiel 1

6 Teile eines Polybutadiens vom mediumcis-Typ (Diene HX 529) wurden in einer Mischung von 6 Teilen Ethylbenzol und 88 Teilen Styrol gelöst. Anschliessend wurde die Mischung mit 0,1 Teilen tert.-Dodecylmercaptan und 0,18 Teilen tert.-Butylperbenzoat versetzt und in einer Kaskade aus vier Reaktoren isotherm polymerisiert. Die beiden ersten Reaktoren bestanden aus Rührkesseln mit einem effektiven Füllvolumen von 1 bzw. 5 Liter. Die beiden weiteren Reaktoren bestanden aus Polymerisationstürmen mit einem Füllvolumen von je 10 Liter. Der Durchsatz betrug 5 l/h und die Temperaturen betrugen im ersten Reaktor 115°C und im 2. Reaktor 120°C, bei Umsätzen von 7,0% bzw. 19%. Die Temperaturen in den Turmreaktoren wurden zu 135°C bzw. 146°C gewählt. Der Umsatz des Styrols betrug 50% bzw. 78,4%. Die Verweilzeit in der ersten Reaktionszone betrug 12 Minuten. Das erhaltene Produkt ist transluzent und besitzt im wesentlichen eine Kapselteilchenmorphologie.

Folgende Eigenschaften wurden gemessen:

Streckspannung: 27 N/mm²
Reissfestigkeit: 24 N/mm²
Lochkerbschlagzähigkeit: 10,5 kJ/m²

Beispiel 2
8 Teile eines handelsüblichen EPDM-Kautschuks wurden mit 92 Teilen Styrol, 5 Teilen Paraffinöl, 0,1 Teilen tert.-Dodecylmercaptan und 0,2 Teilen tert.-Butylperbenzoat gemischt und wie in Beispiel 1 beschrieben in einer Reaktionskaskade aus vier Reaktoren polymerisiert.

| Reaktor 1: | Füllvolumen | 1 | l |
| | Umsatz | 12,7 | % |
| | Temperatur | 110 | °C |
| | | | |
| Reaktor 2: | Füllvolumen | 1 | l |
| | Umsatz | 25,7 | % |
| | Temperatur | 123 | °C |

Der Durchsatz betrug 4 l/h. Das Volumen der Reaktoren 3 und 4 betrug jeweils 10 l. Die Polymerisationstemperaturen lagen bei 135°C bzw. 143°C. Der Feststoffgehalt im letzten Reaktor betrug 88%. Die Verweilzeit in der ersten Reaktionszone betrug 15 Minuten. An Proben des erhaltenen Produktes wurden bestimmt:

Streckspannung: 28 N/mm²
Reissfestigkeit: 21,5 N/mm²
Lochkerbschlagzähigkeit: 13,4 kJ/m²

Beispiel 3
Das Beispiel 2 wurde wiederholt, indem im ersten Reaktor nur bis zu einem Umsatz von 7% polymerisiert wurde. Um dies zu erzielen, wurde der Durchsatz von 4 l/h auf 9 l/h erhöht. Die Verweilzeit in der ersten Reaktionszone betrug 7 Minuten.

| Reaktor 1: | Füllvolumen | 1 | l |
| | Umsatz | 7 | % |
| | Temperatur | 110 | °C |
| | | | |
| Reaktor 2: | Füllvolumen | 2 | l |
| | Temperatur | 130 | °C |
| | Umsatz (gesamt) | 23,8 | % |

Die Temperaturen in den Reaktoren 3 und 4 betrugen 136°C bzw. 144°C. Es wurde bis zu einem Feststoffgehalt von 88% polymerisiert. Das erhaltene Produkt zeigte folgende Eigenschaften:

Streckspannung: 27 N/mm²
Reissfestigkeit: 21,5 N/mm²
Lochkerbschlagfestigkeit: 12,1 kJ/m²

Vergleichsversuch
Beispiel 2 wurde wiederholt mit der Massgabe, dass der Durchsatz auf 1,2 l/h abgesenkt wurde. Unter diesen Bedingungen beträgt die Verweilzeit in der ersten Reaktionszone 50 Minuten.

Das auf diese Wege erhaltene Produkt besitzt eine sehr schlechte Zähigkeit, wie aus den folgenden Messwerten hervorgeht:

Streckspannung: 30,2 N/mm²
Reissfestigkeit: 18,6 N/mm²
Lochkerbschlagzähigkeit: 6,2 kJ/m²

**Patentansprüche**

1. Verfahren zur kontinuierlichen Herstellung von mit Kautschuk modifizierten Polymerisaten von Vinylaromaten, wobei man ein Gemisch, das

a1) mindestens eine monomere aromatische Vinylverbindung und
a2) mindestens ein kautschukartiges Polymerisat, in einem Anteil von 3 bis 30 Gew.-%, bezogen auf Monomeres a1), sowie
a3) gegebenenfalls ein Lösungsmittel enthält

in Gegenwart von

b) Radikalinitiatoren und gegebenenfalls von
c) Mercaptanen als Kettenüberträgern

bei Temperaturen im Bereich von 80 bis 180°C in mindestens zwei isotherm betriebenen Reaktions-Zonen unter Rühren polymerisiert, das erhaltene Polymerisat in einer Entgasungszone von vinylaromatischen Monomeren und gegebenenfalls von Lösungsmitteln befreit und letztere in den Prozess zurückführt, dadurch gekennzeichnet, dass die Verweilzeit der Reaktanden in der 1 Reaktionszone ≦ 35 Minuten ist.
2. Verwendung der Formmassen gemäss Anspruch 1 zur Herstellung von Formteilen durch Spritzgiessen.
3. Formteile aus Formmassen gemäss Anspruch 1.

**Revendications**

1. Procédé pour la préparation en continu de polymères vinyl-aromatiques modifiés par un caoutchouc, dans lequel un mélange contenant

a1) au moins un composé vinylique aromatique monomère et
a2) au moins un polymérisat caoutchouteux en une proportion de 3 à 30% en poids par rapport au monomère a1),

ainsi qu'éventuellement

a3) un solvant,

est polymérisé sous agitation, à des températures dans la gamme de 80 à 180°C, dans au moins deux zones de réaction à fonctionnement isotherme, en présence

b) d'initiateurs à radicaux libres et éventuellement
c) de mercaptans comme agents de transfert de chaînes,

le polymérisat formé est séparé dans une zone de dégazage du monomère vinyl-aromatique et du solvant éventuel, qui sont recyclés dans le procédé, caractérisé en ce que la durée de séjour des réactifs dans la première zone de réaction est inférieure ou égale à 35 minutes.

2. Utilisation des matières à mouler selon la revendication 1 pour la fabrication d'éléments façonnés par moulage par injection.

3. Eléments façonnés en matières à mouler selon la revendication 1.

## Claims

1. A process for the continuous preparation of rubber-modified polymers of vinyl-aromatics, by polymerizing a mixture which contains

a1) one or more monomeric aromatic vinyl compounds
a2) one or more elastomeric polymers, in an amount of from 3 to 30% by weight, based on monomer a1), with or without
a3) a solvent

in the presence of

b) free radical initiators, with or without
c) mercaptans as chain transfer agents,

at from 80 to 180°C, with stirring, in two or more isothermally operated reactions zones, freeing the polymer obtained, in a devolatilization zone, from vinyl-aromatic monomers and from any solvent, if used, and recycling the latter to the process, wherein the residence time of the reactants in the first reaction zone is ≦ 35 minutes.

2. The use of the molding materials as claimed in claim 1 for the production of moldings by injection molding.

3. Moldings produced from the molding materials as claimed in claim 1.